# EUROPEAN PATENT APPLICATION

(11) **EP 4 610 531 A1**
(43) Date of publication of application: **03.09.2025**
(21) Application number: 23882392.6
(22) Date of filing: 06.10.2023
(51) Int. Cl.: F16K 31/64, F16B 21/18, F16K 49/00

(54) **TEMPERATURE ADJUSTMENT DEVICE**

(30) Priority: 25.10.2022 JP 2022170464
(71) Applicant: Nippon Thermostat Co., Ltd., Kiyose-shi Tokyo 204-0003 (JP)
(72) Inventor: NISHIMURA Tetsuya, Kiyose-shi, Tokyo 204-0003 (JP)
(74) Representative: Hoffmann Eitle
(86) International application number: PCT/JP2023/036596
(87) International publication number: WO 2024/090183

(57) **Abstract**

The present invention suppresses an increase in the size of a sleeve, and reduces the occurrence of the rattling of a temperature adjusting member even if a housing is made of a synthetic resin. This temperature adjusting device comprises: includes a housing (1) having a cylindrical sleeve (20e); a temperature control member (40) having a heating part, or a temperature sensing part, which is inserted into the housing from the sleeve; a clip member (45) that prevents the temperature control member from coming off from the sleeve; and a first biasing member (5). An outwardly extending flange portion part (40bl) is formed on [[an]] the outer periphery of the temperature control member. The sleeve has a groove formed on an outer periphery thereof along a circumferential direction, and a horizontal hole that is formed through the thickness of the sleeve, and has one end opening to the groove. The clip member has an external fitting part that is elastically deformable and fits in the groove, and an inner protruding part that extends from both ends of the external fitting part in mutually facing the directions[[,]] and is inserted into the horizontal hole to press the flange portion part from a tip side of the sleeve. The first biasing member biases the temperature control member in [[a]] the ejecting direction from the sleeve.

## Description

### Technical Field

This invention relates to a temperature adjusting device provided with a temperature adjusting member having a heating portion or a temperature sensing unit.

### Background Art

As a temperature adjusting device, for example, a thermostat device that adjusts the coolant temperature and which is provided in a cooling circuit of an engine (an internal combustion engine) is known. In some thermostat devices, an accessory part such as a plug is attached to a sleeve provided on the housing of the thermostat device using a clip member, as disclosed in patent literature 1.

### Citation List

### Patent Literature

PTL 1: JP-A-2010-048142

### Summary of Invention

### Technical Problem

In a case where the accessory is a temperature adjusting member such as a heater or a temperature sensor that needs to be energized, vibration will cause wear on the electrical connections, resulting in contact failure (energization failure) if rattling occurs in the temperature adjusting member. Therefore, the temperature adjusting member must be firmly attached to the housing without rattling. However, if the temperature adjusting member is firmly attached to a resin housing with, for example, a clip member, there is a risk of rattling in the temperature adjusting member due to creep deformation of the housing, and a contact failure will occur.

The object of the present invention, which is made in consideration of the above problem, is to provide a temperature adjusting device capable of inhibiting the rattling of the temperature adjusting member.

### Solution to Problem

In order to solve the above problems, the temperature adjusting device according to the present invention includes a housing having a cylindrical sleeve, a temperature adjusting member having a heating portion or temperature sensing unit that is inserted from the sleeve into the housing, and a clip member preventing the temperature adjusting member from coming off from the sleeve, and a first biasing member, wherein a flange portion protruding outwardly is formed on the periphery of the temperature adjusting member, the sleeve is provided with a groove formed on the outer periphery along the circumferential direction, and a lateral hole one end of which is opened in the groove that penetrates the thick portion of the sleeve, the clip member has an outer fitting portion that is elastically deformable and fittable to the groove and inward protrusions that extend facing to each other from both ends of the outer fitting portion and press the flange portion from the tip end side of the sleeve by being inserted through the lateral hole, and the first biasing member biases the temperature adjusting member toward the ejecting direction from the sleeve.

In this configuration, since the temperature adjusting member is biased by the first biasing member in the ejecting direction from the sleeve and the clip member inhibits ejection, even if the groove of the sleeve deforms in the opening direction due to creep deformation, rattling is inhibited by the temperature adjusting member following the deformation.

Furthermore, in the temperature adjusting device, an annular step may be provided on the inner circumference of the sleeve, and the first biasing member may be interposed between the flange portion and the step. Thus, the first biasing member can be easily arranged and the temperature adjusting device can be made compact by suppressing the large size even when the first biasing member is provided.

Furthermore, the temperature adjusting device may be provided with an annular sealing member for sealing the outer periphery of the temperature adjusting member, and the sealing member may be compressed from both sides in the radial direction between the temperature adjusting member and the housing; that is, the sealing member seals the radial direction. Thereby, the rattling of the temperature adjusting member can be suppressed more surely because the rattling in the axial and radial directions against the sleeve of the temperature adjusting member can be suppressed by the first biasing member and the sealing member.

The first biasing member may be a disc spring; in this case, the first biasing member can be inexpensive and compact.

The first biasing member may be made of an elastomer, which allows the first biasing member to be inexpensive and compact in size. In addition, since the first biasing member serves as a sealing member for sealing the axial direction, the outer periphery of the temperature adjusting member can be sealed more securely together with the sealing member for sealing the radial direction.

The temperature adjusting device is further provided with a flow passage of the coolant formed inside the housing, a valve that opens and closes the flow passage, a thermo-element that extends and contracts in accordance with the temperature of the coolant to drive the valve to open and close, and a second biasing member that biases the valve toward the closing direction, wherein the thermo-element includes a temperature-sensitive case containing a temperature-sensitive member whose volume changes in accordance with the temperature of the coolant, and a piston one end of which is supported by the housing and which advances from and retracts into the temperature-sensitive case following the volume change of the temperature-sensitive member, and, wherein the temperature adjusting member includes the heating portion, and the heating portion may be inserted into the piston.

In the temperature adjusting device, the temperature adjusting member does not receive the pressure within the flow passage. However, by providing the first biasing member which biases the temperature adjusting member in the ejecting direction as described above, the rattling of the temperature adjusting member is suppressed. That is, the installation of the first biasing member to the temperature adjusting device is particularly effective.

### Advantageous Effects of Invention

The temperature adjusting device according to the present invention makes it possible to suppress the occurrence of the rattling of the temperature adjusting member.

### Brief Description of Drawings

Fig. 1 is a perspective view of a thermostat device as a temperature adjusting member of a first embodiment.
Fig. 2 is a plan view of the thermostat device shown in Fig. 1.
Fig. 3 is a III-III cross-sectional view of Fig. 2.
Fig. 4 is a IV-IV cross-sectional view of Fig. 2.
Fig. 5 is a partially enlarged cross-sectional view of Fig. 4.
Figs. 6A and 6B are partially enlarged cross-sectional views of Fig. 5.
Fig. 7 is a perspective view to illustrate an assembly procedure for the thermostat device shown in Fig. 1.
Fig. 8 is another perspective view to illustrate the assembly procedure for the thermostat device shown in Fig. 1.
Fig. 9A is a perspective view of a water outlet that is a temperature adjusting device according to a second embodiment as viewed from the front side, and Fig. 9B is an enlarged perspective view showing a portion thereof partially cut away.
Fig. 10 is a descriptive view schematically illustrating an engine cooling circuit.

### Description of Embodiments

An embodiment of a temperature adjusting device according to the present invention will be described below with reference to the following drawings.

First, a temperature adjusting device according to a first embodiment will be described. In the first embodiment, the temperature adjusting device is a thermostat device disposed in a cooling circuit of an engine (internal combustion engine).

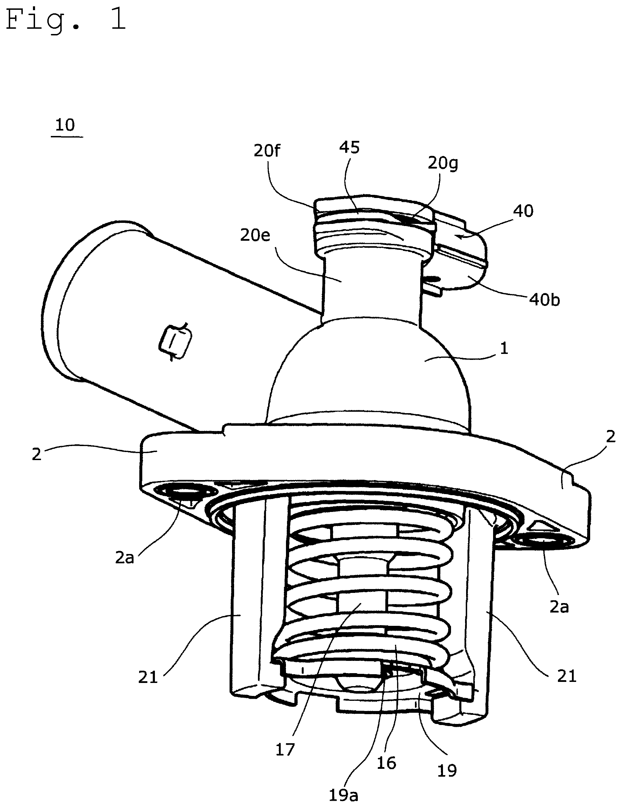

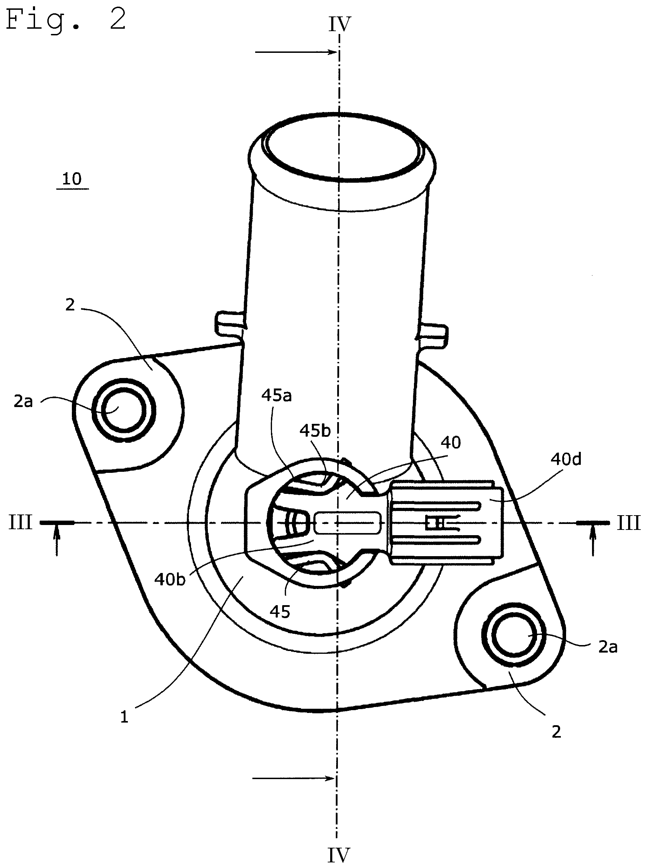

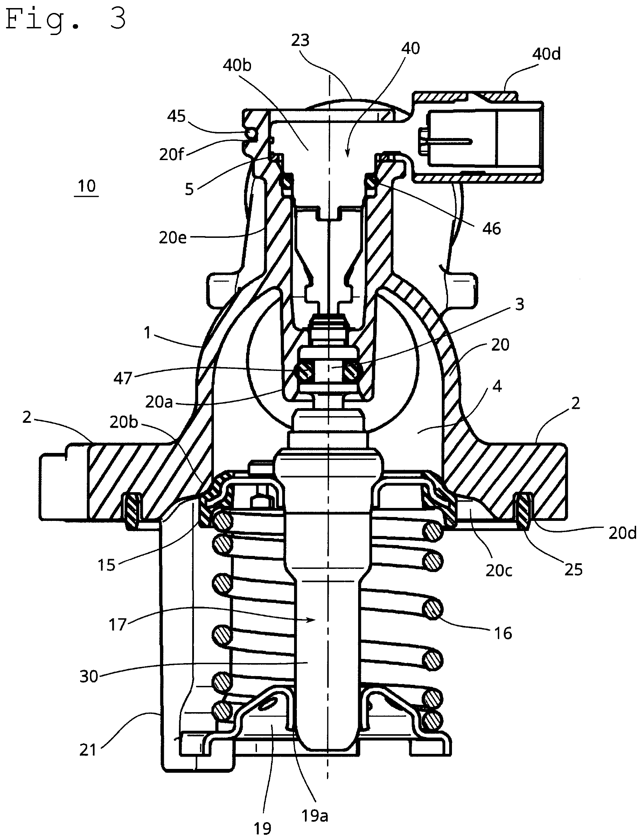

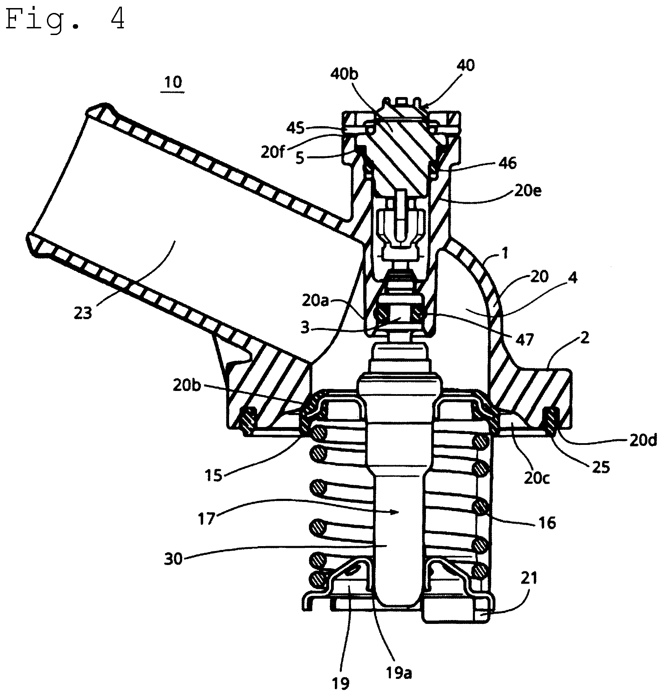

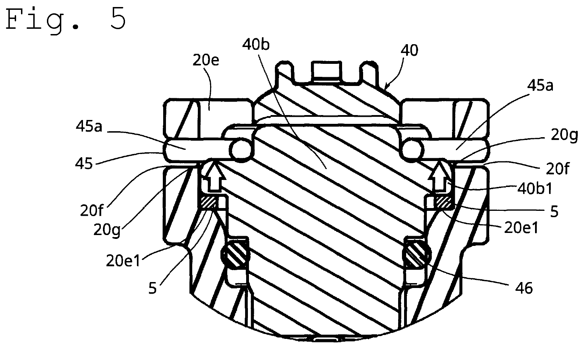

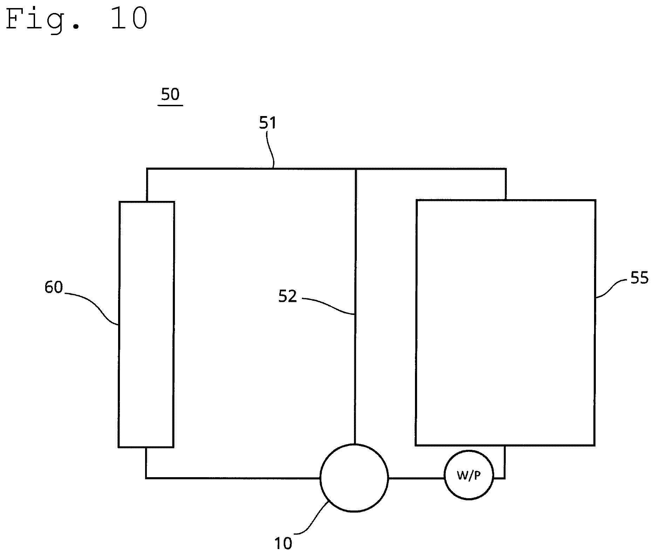

Fig. 1 is a perspective view of a thermostat device 10, and Fig. 2 is a plan view of the thermostat device shown in Fig. 1. Fig. 3 is a III-III cross-sectional view of Fig. 2. Fig. 4 is a IV-IV cross-sectional view of Fig. 2. Fig. 5 is a partially enlarged cross-sectional view of a portion shown in Fig. 4, and Fig. 10 is a descriptive view schematically illustrating an engine cooling circuit.

As shown in Fig. 10, the cooling circuit 50 is provided with a main flow passage 51 and a bypass flow passage 52. The main flow passage 51 returns the coolant flowing out from the engine 55 to the engine 55 after it has been cooled by a radiator 60. The bypass flow passage 52 returns the coolant flowing out from the engine 55 to the engine 55 without passing through the radiator 60.

The thermostat device 10 is disposed on a coolant inlet side of the engine 55. When the temperature of the coolant is higher than a predetermined temperature, the thermostat device 10 opens the main flow passage 51. Meanwhile, when the temperature is lower than the predetermined temperature, the thermostat device 10 closes the main flow passage 51 and opens the bypass flow passage 52.

Note that the bypass flow passage 52 may be normally opened regardless of the coolant temperature, or closed when the main flow passage 51 is opened.

As shown in Figs. 3 and 4, the thermostat device 10 includes a housing 1, a flow passage 4 formed inside the housing 1 for coolant, a valve 15 that opens and closes the flow passage 4, a thermo-element 17 that drives the valve 15 to open and close by extending and retracting in accordance with the coolant temperature, a coil spring 16 that biases the valve 15 toward the closing direction, a frame 19 that supports one end of the coil spring 16, a heater 40, and a clip member 45 that fixes the heater 40 to the housing 1. For the convenience of the description below, the upper and lower portions of the thermostat device 10 shown in Fig. 3 are simply referred to the upper and lower.

In the present embodiment, the coil spring 16 is the second biasing member, and the heater 40 is a temperature adjusting member.

In the present embodiment, the housing 1 is made of synthetic resin. The housing 1 includes a substantially topped cylindrical body 20 having an opening 20c at the bottom edge thereof, a pair of flange portions 2 and 2 protruding outwardly from the outer periphery at the lower end of the body 20, a pair of legs 21 and 21 extending downwardly facing each other from the edge of the opening at the lower end of the body 20, a connecting opening 23 toward the radiator 60 side extending obliquely upwardly from the top of the body 20, and a sleeve 20e, to which the heater 40 is attached, standing upwardly from the top of the body 20.

The coolant is configured to pass through the connecting opening 23, inside of the body 20, and the opening 20c; these constitute the flow passage 4 in the housing 1, and the flow passage 4 is connected to the main flow passage 51.

As shown in Figs. 1 and 2, bolt holes 2a are formed on the pair of flange portions 2 and 2, respectively. A metal tube is press-fitted into the bolt hole 2a, and a bolt (not shown) is inserted into the tube to attach the thermostat device 10 to a counterpart member. At the edge of the opening at the lower end of the body 20, which is located on the inner side than the bolt hole 2a, an annular groove 20d is formed to surround the opening 20c, as shown in Fig. 3, and a gasket 25 is attached to the groove 20d.

The gasket 25 seals between the thermostat device 10 and the counterpart member and prevents the coolant flowing in the housing 1 from leaking out in a state where the thermostat device 10 is attached to the counterpart member. The inside the housing 1 means the inside of the gasket 25 on the body 20. The counterpart member referred to is, for example, a water pump, a water jacket for the engine, or members with which the thermostat device 10 is attached thereto.

An annular valve seat 20b is formed on an inner circumference just above the edge of the opening at the lower end of the body 20 located inside of the housing 1, and the flow passage 4 is opened or closed by the valve 15 leaving or sitting on the valve seat 20b.

The thermo-element 17 is inserted in the housing 1. The thermo-element 17 is disposed such that its axis is aligned with the axis of the body 20. The thermo-element 17 includes a temperature-sensitive case 30 containing a temperature-sensitive member such as wax the volume of which changes in accordance with the temperature and a piston 3, the upper end of which is supported by the housing 1, and which goes out and comes into the temperature-sensitive case 30 in accordance with the volume change of the temperature-sensitive member.

When the temperature of the coolant around the temperature-sensitive case 30 rises and the temperature-sensitive member thereinside expands, the piston 3 goes out from the temperature-sensitive case 30 and the thermo-element extends. On the other hand, when the temperature of the coolant around the temperature-sensitive case 30 drops and the temperature-sensitive member thereinside contracts, the piston 3 comes into the temperature-sensitive case 30 and the thermo-element 17 retracts. Thus, the thermo-element 17 extends and retracts in accordance with the temperature.

The tip end of the piston 3 which is located at the upper end of the thermo-element 17 is fitted to a cylindrical boss portion 20a formed on the apex of the body 20, thereby blocking the piston 3 from moving upward against the housing **1.** Thus, when the thermo-element 17 is extended or retracted, the temperature-sensitive case 30 moves up and down without changing the position of the piston 3 against the housing 1. A sealing member 47 such as an O-ring is provided on the outer periphery of the piston 3. The sealing member 47 seals between the piston 3 and the boss portion 20a in a liquid-tight manner.

The valve 15 is attached to the outer periphery of the temperature-sensitive case 30, so that the valve 15 moves up and down together with the temperature-sensitive case 30 as the thermo-element extends and retracts. When the thermo-element 17 extends and the valve 15 moves downward, the flow passage 4 is allowed to communicate because the valve 15 moves away from the valve seat 20b to allow the coolant to flow therebetween. On the other hand, when the thermo-element 17 retracts and the valve 15 moves up and sits on the valve seat 20b, the communication of the flow passage 4 is closed. As described above, the flow passage 4 is opened or closed by the valve 15 leaving or sitting on the valve seat 20b.

The upper end of the coil spring 16 abuts on the rear surface of the valve 15. The coil spring 16 is arranged to surround the circumference of the thermo-element 17. The lower end (the one end) of the coil spring 16 is supported by the frame 19.

The frame 19 is hooked to the tip end portion of the pair of legs 21 and 21 formed in the housing 1, thereby blocking the downward movement against the housing 1. Furthermore, a penetrating hole 19a is formed at the center of the frame 19, and the temperature-sensitive case 30 is inserted into the penetrating hole 19a so as to be movable up and down. That is, the temperature-sensitive case 30 is movable up and down against the frame 19.

The coil spring 16 is a compression spring and is disposed between the valve 15 and the frame 19 in a compressed manner. This causes the valve 15 to be biased upward (toward the valve seat 20b) by the coil spring 16. In this configuration, when the coolant temperature surrounding the thermo-element 17 becomes high and the thermo-element 17 extends, the valve 15 moves downward against the biasing force of the coil spring 16 and separates from the valve seat 20b. On the other hand, when the coolant temperature surrounding the thermo-element 17 becomes low and the thermo-element 17 retracts, the valve 15 moves upward under the biasing force of the coil spring 16 and approaches the valve seat 20b.

In the thermostat device 10, the valve 15 can be actively driven to open and close by heating the temperature-sensitive member by energizing the heater 40. More particularly, the housing 1 is provided with a cylindrical sleeve 20e directly above the boss portion 20a. The heater 40 is attached to the sleeve 20e by a clip member 45.

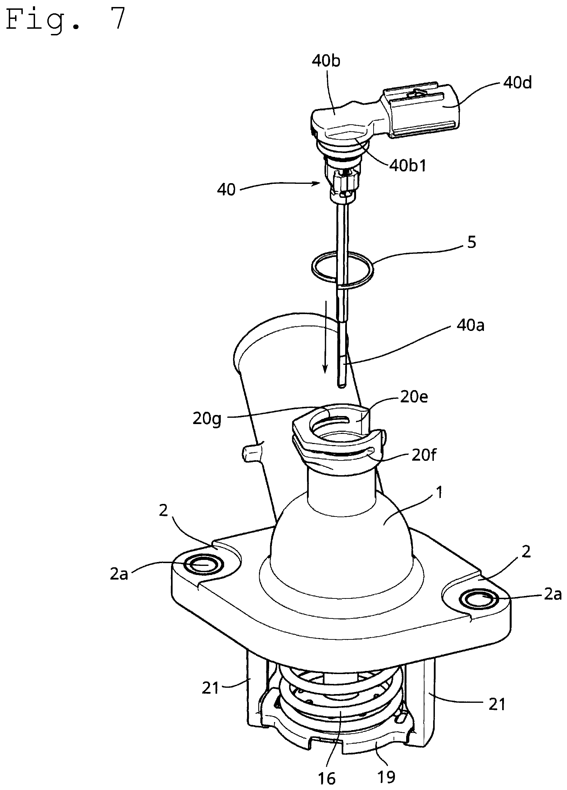

As shown in Fig. 7, the heater 40 includes a rod-like heating portion 40a being inserted into the piston 3, a mounting portion 40b connected to one end of the heating portion 40a clipped to the sleeve 20e, and a connector 40d protruding laterally from the mounting portion 40b. A cable for energization is connected to the connector 40d and can be energized to the heater 40 from the power supply of vehicles.

When the heater 40 is energized, the heating portion 40a generates heat. This heats the temperature-sensitive member in the temperature-sensitive case 30 through the piston 3, causing it to expand. The piston 3 is then pushed out from the temperature-sensitive case 30 to open the valve 15.

As shown in Fig. 3, the sleeve 20e is provided to be erected upwardly from the top of the body 20 on the axis of the body 20 of the housing 1. One end of the sleeve 20e (lower end) continuing to the housing 1 is a base end, and the opposite end (upper end) to the base end is the tip end of the sleeve 20e.

For example, as shown in Fig. 7, a groove 20f and a lateral hole 20g are formed on the sleeve 20e. The groove 20f opens in the lateral direction along the circumference (to the direction orthogonal to the axis of the sleeve 20e) at the outer circumference of the sleeve 20e. The lateral hole 20g penetrates the thick portion of the sleeve 20e, and one end of the lateral hole 20g opens to the inside of the groove 20f. In addition, as shown in Fig. 5, an annular step 20e1 is formed on the inner circumference of the sleeve 20e. The inner diameter of the tip end side from the step 20e1 is larger than the inner diameter of the base end side, and the step 20e1 faces the tip end side of the sleeve 20e.

The groove 20f and the lateral hole 20g are located closer to the tip end side of the sleeve 20e from the step 20e1. A disc spring 5 is stacked on the step 20e1. The disc spring 5 is a first biasing means.

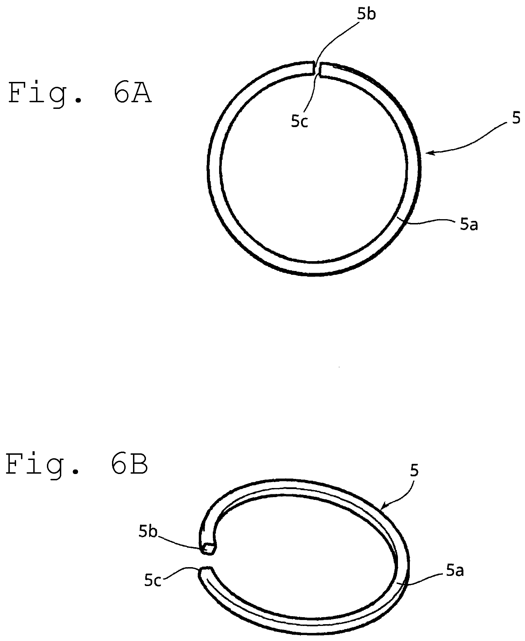

As shown in Fig. 6, the disc spring 5 is a split lock washer and has an annular body 5a in plan view. The direction along the central axis of the body 5a is referred to as the axial direction of the disc spring 5 and the circumferential direction of the body 5a is referred to as the circumferential direction of the disc spring 5. The body 5a has a split at one position along the circumferential direction and is twisted so that both ends 5b and 5c thereof are shifted in the axial direction. The disc spring 5 is elastic, and when the two ends 5b and 5c are compressed so that they come closer together, it deforms elastically and would return to its original shape by its own elastic force.

In addition, as shown in Fig. 5, a flange portion 40b1 protruding outwardly is formed on the mounting portion 40b of the heater 40. The outer diameter of the flange portion 40b1 is larger than the inner diameter of the disc spring 5 and that of the step 20e1. As shown in Fig. 7, when the heater 40 is inserted into the sleeve 20e from the heating portion 40a side and the mounting portion 40b is inserted into the sleeve 20e, the disc spring 5 is compressed to be elastically deformed between the flange portion 40b1 and the step 20e1.

Then, the disc spring 5 biases the flange portion 40b1 in the direction of pushing up, that is, the heater 40 in the ejecting direction from the sleeve 20e.

As shown in Fig. 5, a sealing member 46, such as an O-ring, is attached to the outer circumference below the flange portion 40b1 of the heater 40. The sealing member 46 seals the outer circumference of the heater 40 to prevent water or dust outside the thermostat device 10 from entering the housing 1. The sealing member 46 is compressed from both sides of the radial direction.

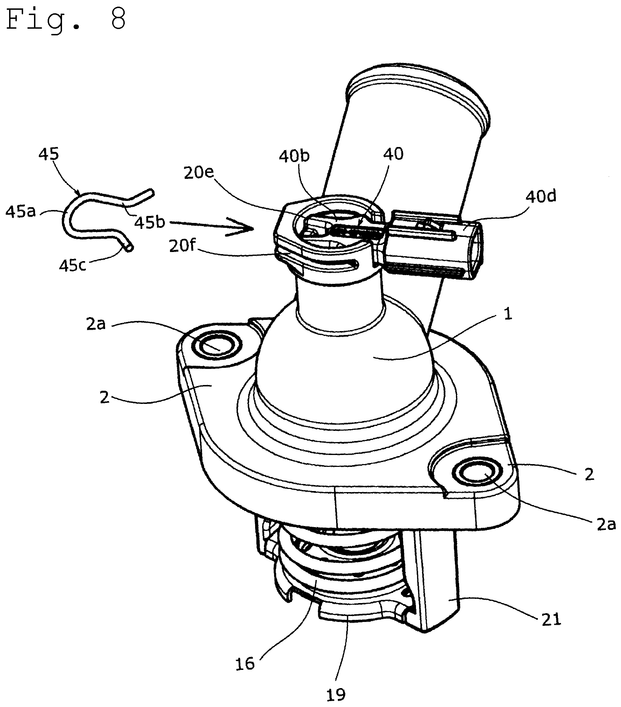

As shown in Fig. 8, the clip member 45, which fixes the heater40 to the sleeve 20e, is made of a metal wire such as stainless steel and includes an outer fitting portion 45a that is in the shape of a U or C shape in plan view and has inward protrusions 45b and 45c that extend facing each other from both ends of the outer fitting portion 45a. The clip member 45 is elastic and would return to its original shape by its elasticity when deformed so as to separate the inward protrusions 45b and 45c.

Furthermore, as described above, when the heater 40 is inserted into the inside of the sleeve 20e and the clip member 45 is mounted on the sleeve 20e in a state in which the disc spring 5 is compressed by the flange portion 41b1, the outer fitting portion 45a is fitted into the groove 20f on the outer circumference of the sleeve 20e, the inward protrusions 45b are inserted into the sleeve 20e from the lateral hole 20g, and the flange portion 40b1 is pressed from the upside (from the tip end side of the sleeve 20e). Thus, the heater 40 is prevented from coming off from the sleeve 20e and is fixed to the sleeve 20e.

With the clip member 45 thus attached, the disc spring 5 is compressed between the flange portion 40b1 and the step 20e1 and it biases in a direction to cause the heater 40 to exit the sleeve 20e.

As described above, the thermostat device (temperature adjusting device) 10 according to the present embodiment includes the housing 1, the heater (a temperature adjusting member) 40, the clip member 45, and the disc spring (first biasing member) 5. The housing 1 has the cylindrical sleeve 20e. The heater 40 has the heating portion 40a. The heating portion 40a is inserted into the housing 1 from the sleeve 20e. The clip member 45 prevents the heater 40 from coming off from the sleeve 20e.

In addition, the flange portion 40b1 outwardly protruding is formed on the outer circumference of the heater 40. The groove 20f and the lateral hole 20g are formed in the sleeve 20e. The groove 20f is formed so as to follow the circumferential direction on the outer circumference of the sleeve 20e. The lateral hole 20g, one end of which opens at the groove 20f, penetrates the thick portion of the sleeve 20e.

The clip member 45 is elastically deformable. The clip member 45 has the outer fitting portion 45a and a pair of inward protrusions 45b and 45c. The outer fitting portion 45a is fitted into the groove 20f of the sleeve 20e. The inward protrusions 45b and 45c extend facing each other from both ends of the outer fitting portion 45a and press the flange portion 40b1 from the tip end side of the sleeve 20e, each of which is inserted into the lateral hole 20g. The disc spring 5 biases the heater 40 in the ejecting direction from the sleeve 20e.

Thus, the heater 40 is biased in the ejecting direction from the sleeve 20e by the disc spring 5, and the flange portion 40b1 thereof is prevented from coming off by being pressed by the inward protrusions 45b and 45c of the clip member 45. Thus, since the state in which the flange portion 40b1 is pushed up by the disc spring 5 and pressed by the clip member 45 is maintained, the rattling of the heater 40 as a temperature adjusting member is inhibited, even when the groove 20f of the sleeve 20e is slightly deformed in the direction of widening upward and downward due to creep deformation when the housing is made of, for example, synthetic resin.

In other words, even when the temperature adjusting member such as the heater 40, which requires electric power, is used, the rattling can be suppressed. This prevents the electrical connection parts from wearing out due to vibration and thus contact failure (energization failure).

In addition, in the thermostat device 10 of the present embodiment, the annular step 20e1 is formed on the inner circumference of the sleeve 20e. The disc spring 5 is disposed between the flange portion 40b1 and the step 20e1. With this construction, the first biasing member such as the disc spring 5, which biases the temperature adjusting member such as the heater 40 in the ejecting direction from the sleeve 20e, is easily arranged, thereby preventing the temperature adjusting device such as the thermostat device 10 from being enlarged and making it compact in size, even when the first biasing member is provided. However, the arrangement of the biasing member can be appropriately changed as long as the temperature adjusting member is biased in the ejecting direction from the sleeve 20e by a biasing member.

In addition, the thermostat device 10 of the present embodiment is provided with the sealing member 46. The sealing member 46 seals the outer circumference of the heater 40. The sealing member 46 is compressed from both sides in radial directions by the heater 40 and the housing 1.

The radial direction referred to herein means the direction along the diameter direction of the sleeve 20e orthogonal to the axial line of the sleeve 20e, wherein the axial direction is denoted by the direction along the axial line of the sleeve 20e. The disc spring 5 biases the heater 40 in the ejecting direction from the sleeve 20e, wherein the direction is the axial direction of the sleeve 20e. As a result, the disc spring 5 can inhibit the heater 40 from rattling against the sleeve 20e in the axial direction. Meanwhile, the sealing member 46 seals the radial direction by being compressed in the radial direction, and can inhibit the heater 40 from rattling against the sleeve 20e in the radial direction.

Thus, according to the configuration described above, since the rattling of the heater 40 against the sleeve 20e in the axial and radial directions is suppressed by the disc spring 5 and the seal member 46, the rattling of the heater 40 as a temperature adjusting member can be securely inhibited.

In addition, in the present embodiment, the first biasing member biasing the heater 40 in the ejecting direction is the disc spring 5, thereby making the first biasing member inexpensive and compact. It should be noted that in the present embodiment, the disc spring 5 is a spring washer but may be a frustoconical spring or a waved washer. Furthermore, the first biasing member is not limited to a disc spring and may be a spring other than a disc spring such as a coil spring or a spring made of an elastomer having elasticity such as rubber.

In the present embodiment, the temperature adjusting device is a thermostat device 10 and is provided with the flow passage 4 of the coolant, the valve 15, thermo-element 17, and the coil spring 16 (a second biasing member). The flow passage 4 is formed inside the housing 1. The valve 15 opens and closes the flow passage 4. The thermo-element 17 extends and contracts in accordance with the temperature of the coolant to drive the valve 15 to close or open. The coil spring 16 biases the valve 15 in the closing direction.

The thermo-element 17 includes a temperature-sensitive case 30 and the piston 3. The temperature-sensitive member is incorporated in the temperature-sensitive case 30. The volume of the temperature-sensitive member changes in accordance with temperature. One end of the piston 3 is supported by the housing 1. The piston 3 advances from and retracts into the temperature-sensitive case 30 in accordance with the volume change of the temperature-sensitive member.

In the present embodiment, the temperature adjusting member is the heater 40 having a heating portion 40a. The heating portion 40a is inserted into the piston 3 and is made capable of heating the temperature-sensitive member.

As described above, according to the above structure, the temperature adjusting device is a thermostat device 10, and the temperature adjusting member is a heater 40 having a heating portion 40a, and the heating portion 40a is inserted into the piston 3, and the heater 40 does not receive pressure in the flow passage. Even with this structure, the rattling of the heater 40 can be suppressed because the thermostat device 10 is equipped with a disc spring (first biasing member) 5.

In this embodiment, the temperature adjusting device is a thermostat device 10, and the temperature adjusting member is a heater 40. However, the temperature adjusting device is not limited to a thermostat device and can be changed as appropriate. In addition, the temperature adjusting member is not limited to a heater and can be replaced with other temperature adjusting members, such as a temperature sensor. And of course, the position of the sleeve 20e provided in the housing 1 can be changed according to the temperature adjusting member.

Successively, a second embodiment according to the present invention will be described. In the present embodiment, the temperature adjusting device is a water outlet with a temperature sensor, which is to be attached to the exit of the coolant of an engine (internal combustion engine).

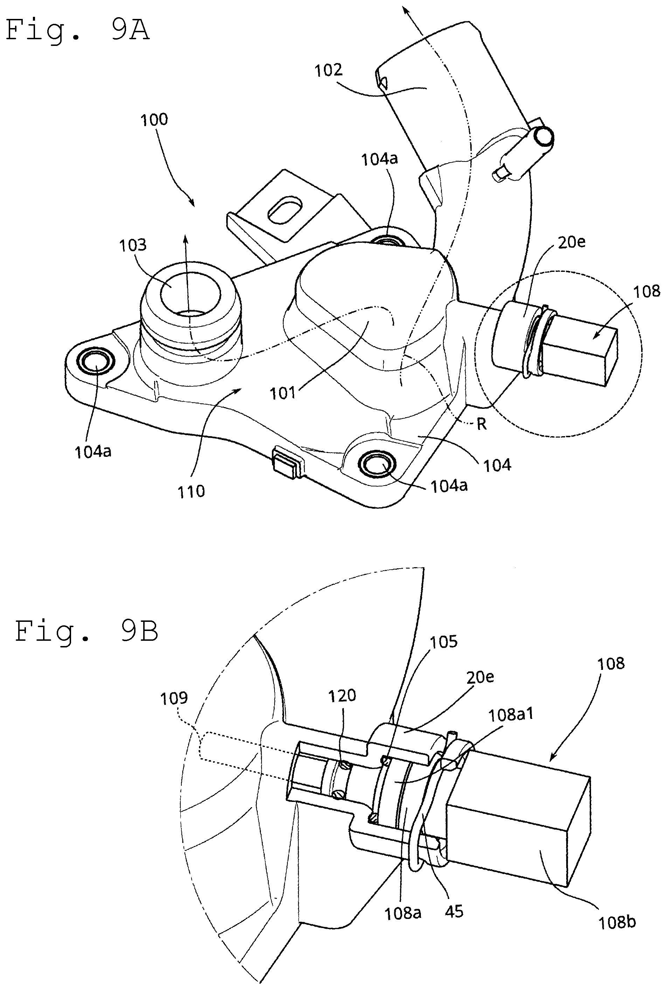

Fig. 9A is a perspective view of a water outlet 100 viewed from the front side, and Fig. 9B is a perspective view illustrating a portion of the water outlet 100 that is magnified and broken.

In the present embodiment, configurations equal to or corresponding to those of the first embodiment are assigned with the same reference signs and the detailed description will be omitted.

The water outlet 100 is attached to the cylinder head (not shown) of the engine. As shown in Fig. 9A, the water outlet 100 is provided with a housing 101, a first connecting opening 102 and a second connecting opening 103 which are provided so as to stand outwardly from the housing 101, a flange portion 104 which protrudes from the edge of the housing 101 to the outer periphery, a temperature sensor 108, and a clip member 45 which fixes the temperature sensor 108 to the housing 101.

In the present embodiment, the temperature sensor 108 is the temperature adjusting member.

In the present embodiment, the housing 101, the first connecting opening 102, the second connecting opening 103, and the flange portion 104 are integrally formed of a synthetic resin, and these form the water outlet body 110. A plurality of bolt holes 104a are provided on the flange portion 104. The water outlet body 110 is bolt-fastened to the cylinder head by inserting bolts (not shown) into the bolt holes 104a. A flow passage R for coolant is formed between the housing 101 and the cylinder head. The coolant flowing out from the cylinder head heads through the flow passage R to various devices such as the radiator or the heater core from the first connecting opening 102 or the second connecting opening 103.

In the water outlet 100, the temperature sensor 108 is attached to the sleeve 20e provided in the housing 101 with the clip member 45, and the temperature sensor 108 can detect the temperature of the coolant flowing through the flow passage R.

More specifically, the sleeve 20e is provided on the side of the housing 101. As shown in Fig. 9B, the temperature sensor 108 includes a temperature sensing portion 109 in a rod shape to be inserted into the flow passage R, a mounting portion 108a which is connected to one end of the temperature sensing unit 109 and clipped to the sleeve 20e, and a connector 108b protruding from the mounting portion 108a. Cables for energization and communication, and others are connected to the connector 108b.

Similar to the first embodiment, a groove 20f, a lateral hole 20g, and a step 20e1 are formed on the sleeve 20e. An O-ring 105 is stacked on the step 20e1. The O-ring 105 is made of an elastically deformable, elastomer such as rubber, and elastically deforms when compressed and tends to return the original shape by its elasticity.

In the present embodiment, the O-ring 105 is the first biasing member.

An outwardly protruding flange portion 108a1 is formed on the mounting portion 108a of the temperature sensor 108. The outer diameter of the flange portion 108a1 is larger than the inner diameters of the O-ring 105 and the step 20e1. Therefore, when the temperature sensor 108 is inserted into the sleeve 20e from the temperature sensing unit 109 side and the mounting portion 108a is inserted into the sleeve 20e, the O-ring 105 is compressed and elastically deformed between the flange portion 108a1 and the step 20e1.

Then, the O-ring 105 biases the flange portion 108a1 in the direction of pushing up, that is, in the ejecting direction the temperature sensor 108 from the sleeve 20e. The O-ring 105 also serves as a sealing member and prevents water from outside the water outlet 100 or dust from entering the housing 101.

A sealing member 120, such as an O-ring, is attached to the outer circumference of the housing 101 side of the temperature sensor 108 closer than the flange portion 108a1 in the mounting portion 108a of the temperature sensor 108. This sealing member 120 seals the outer circumference of the temperature sensor 108 and prevents the coolant in the flow channel R from leaking out of the housing 101.

The clip member 45, similar to the first embodiment, has an outer fitting portion 45a and a pair of inward protrusions 45b and 45c. As described above, when the temperature sensor 108 is inserted into the sleeve 20e and the clip member 45 is mounted to the sleeve 20e in a state in which the O-ring 105 is compressed by the flange portion 108a1, the outer fitting portion 45a is fitted into the groove 20f on the periphery of the sleeve 20e, and the inward protrusions 45b and 45c are inserted into the sleeve 20e from a lateral hole 20g to press the flange portion 108a1 from the tip end side of the sleeve 20e. Thus, the temperature sensor 108 is prevented from coming off from the sleeve 20e and is fixed to the sleeve 20e.

Thus, in the state in which the clip member 45 is attached, the O-ring 105 is compressed between the flange portion 108a1 and the step 20e1 and biases the temperature sensor 108 in the ejecting direction from the sleeve 20e.

As described above, the water outlet (temperature adjusting device) 100 according to the present embodiment is provided with the housing 101, the temperature sensor (temperature adjusting member) 108, the clip member 45, and the O-ring (the first biasing member) 105. The housing 101 has a sleeve 20e, similar to that in the the first embodiment. The temperature sensor 108 has the temperature sensing unit 109. The temperature sensing unit 109 is inserted into the housing 101 from the sleeve 20e. The clip member 45 is similar to that in the first embodiment.

An outwardly protruding flange portion 108a1 is formed on the outer periphery of the temperature sensor 108. The O-ring 105 biases the temperature sensor 108 in the ejecting direction from the sleeve 20e.

Thus, the temperature sensor 108 is biased by the O-ring 105 in the ejecting direction from the sleeve 20e, and the flange portion 108a1 is prevented from coming off by being pressed by the inward protrusions 45b and 45c of the clip member 45. Accordingly, even if, for example, the groove in the sleeve 20e is slightly deformed due to creep deformation in the widening direction, the state in which the flange portion 108a1 is pushed out by the O-ring 105 and held down by the clip member 45 is maintained, so the rattling of the temperature sensor 108 is suppressed.

In other words, even when the temperature adjusting member such as the temperature sensor 108, which requires electric power, is used, the rattling can be suppressed. This prevents the electrical connection parts from wearing out due to vibration and thus contact failure (energization failure).

Also in the water outlet 100 of this embodiment, similar to the first embodiment, an annular step 20e1 is formed on the inner circumference of the sleeve 20e. The O-ring 105 is interposed between the flange portion 108a1 and the step 20e1. Thus, the first biasing member, such as the O-ring, which biases the temperature adjusting member, such as the temperature sensor 108, in the ejecting direction from the sleeve 20e, is easily arranged, and even when the first biasing member is provided, the increase in the size of the temperature adjusting device such as the water outlet 100 can be inhibited and made it compact. However, the arrangement of the first biasing member can be suitably changed if the temperature adjusting member can be biased by the first biasing member in the ejecting direction from the sleeve 20e.

The water outlet 100 of the present embodiment is provided with the sealing member 120. The sealing member 120 seals the outer periphery of the temperature sensor 108.
The sealing member 120 is compressed in the radial direction from both sides between the temperature sensor 108 and the housing 101.

The radial direction referred to herein is the direction orthogonal to the center axial line of the sleeve 20e and the direction along the diameter of the sleeve 20e, and the direction along the axial line of the sleeve 20e is referred to as the axial direction. The O-ring 105 biases the temperature sensor 108 in the ejecting direction from the sleeve 20e, and the direction is the axial direction of the sleeve 20e. The O-ring 105 can suppress the rattling of the temperature sensor 108 in the axial direction against the sleeve 20e. Meanwhile, the sealing member 120 seals in the radial direction by being compressed in the radial direction and reliably suppresses the rattling in the radial direction of the temperature sensor 108 against the sleeve 20e.

That is, the above configuration can reliably suppress the rattling of the temperature sensor 108 because the O-ring 105 and the sealing member 120 suppress the axial and radial rattling of the temperature sensor 108 against the sleeve 20e.

In the present embodiment, the first biasing member that biases the temperature sensor 108 in the ejecting direction is the O-ring 105, which is made of an elastomer. As a result, the first biasing member can be made inexpensive and compact in size. Furthermore, since the O-ring (elastomer) 105 serves as a sealing member, the outer periphery of the temperature sensor 108 is sealed by both the O-ring 105 and the sealing member 120, and the outer periphery of the temperature sensor 108 can be reliably sealed.

More specifically, when the temperature sensor 108 is significantly displaced by such as by vibration in one direction in the radial direction from the center of the sleeve 20e, a compression amount at a portion of the peripheral direction of the sealing member 120 becomes large, and the compression amount at a portion on the opposite side thereof becomes small. Then, even if the coolant leakage occurs from the portion where the compression amount of the sealing member 120 is small, the O-ring 105 can seal the leakage. Thus the O-ring 105 serves as a backup seal for the sealing member 120, and similarly, the sealing member 120 serves as a backup seal for the O-ring 105, thereby reliably preventing the leakage.

Although, in the present embodiment, the first biasing member is the O-ring 105 and the O-ring 105 is made of an elastomer, the first biasing member may be a member such as a packing made of an elastomer other than the O-ring. Further, the first biasing member may be a spring such as a spring washer.

In the present embodiment, the temperature adjusting device is the water outlet 100, and the temperature adjusting member is the temperature sensor 108. However, the temperature adjusting device is not limited to the water outlet and can be changed appropriately. The temperature adjusting member is not limited to the temperature sensor and may be changed to another temperature adjusting member, such as a heater. Of course, it is also possible to change the position of the sleeve 20e in the housing 101 according to the temperature adjusting members.

A detailed description of the preferred embodiment of this invention is given above, but it is possible to modify, transform, and change it as long as it does not depart from the scope of the patent claims.

### Reference Signs List

- 1: housing
- 2: flange portion
- 3: piston
- 5: disc spring (first biasing member)
- 10: thermostat device (temperature adjusting device)
- 15: valve
- 16: coil spring (second biasing member)
- 19: frame
- 19b: engaging portion
- 20: body
- 20a: boss portion
- 20b: valve seat
- 20c: opening
- 20d: groove
- 20e: sleeve
- 20f: groove
- 20g: lateral hole
- 21: leg
- 40: heater (temperature adjusting member)
- 40b: mounting portion
- 41: temperature sensor
- 45: clip member
- 45a: curved portion
- 45b: inward protrusion
- 46: sealing member
- 100: water outlet (temperature adjusting device)
- 101: housing
- 101a: sleeve
- 105: O-ring (biasing member)
- 108: temperature sensor (temperature adjusting member)
- 109: temperature sensing unit
- R: flow passage

## Claims

1. A temperature adjusting device, comprising:
a housing having a cylindrical sleeve;
a temperature adjusting member having a heating portion or temperature sensing unit that is inserted from the sleeve into the housing;
a clip member preventing the temperature adjusting member from coming off from the sleeve; and
a first biasing member,
wherein
a flange portion protruding outwardly is formed on the periphery of the temperature adjusting member,
the sleeve is provided with a groove formed on the outer periphery along the circumferential direction and a lateral hole one end of which is opened in the groove that penetrates the thick portion of the sleeve,
the clip member includes an outer fitting portion that is elastically deformable and fittable to the groove and
inward protrusions that extend facing to each other from both ends of the outer fitting portion and press the flange portion from the tip end side of the sleeve by being inserted through the lateral hole, and
the first biasing member biases the temperature adjusting member toward the ejecting direction from the sleeve.

2. **.** The temperature adjusting device according to claim 1,
wherein an annular step is provided on an inner circumference of the sleeve, and the first biasing member is interposed between the flange portion and the step.

3. **.** The temperature adjusting device according to claim 1,
wherein an annular sealing member for sealing the outer periphery of the temperature adjusting member is provided, and the sealing member is compressed from both sides in the radial direction between the temperature adjusting member and the housing.

4. **.** The temperature adjusting device according to claim 1,
wherein the first biasing member is a disc spring.

5. **.** The temperature adjusting device according to claim 1,
wherein the first biasing member is made of an elastomer.

6. **.** The temperature adjusting device according to any one of claims 1 to 5, further comprising:
a flow passage of the coolant formed inside the housing;
a valve that opens and closes the flow passage;
a thermo-element that extends and contracts in accordance with the temperature of the coolant to drive the valve to open and close; and
a second biasing member that biases the valve toward the closing direction,
wherein the thermo-element comprises a temperature-sensitive case containing a temperature-sensitive member whose volume changes in accordance with the temperature, and a piston, one end of which is supported by the housing, which advances from and retracts into the temperature-sensitive case in accordance with the volume change of the temperature-sensitive member, and
wherein the temperature adjusting member includes the heating portion, and the heating portion is inserted into the piston.
